(19) Europäisches Patentamt

European Patent Office

Office européen des brevets

(11) **EP 1 707 669 A2**

(12) **EUROPEAN PATENT APPLICATION**

(43) Date of publication:
**04.10.2006 Bulletin 2006/40**

(51) Int Cl.:
***D21C 9/00*** *(2006.01)*

(21) Application number: **06251714.9**

(22) Date of filing: **29.03.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **31.03.2005 US 96799**

(71) Applicant: **WEYERHAEUSER COMPANY**
**Federal Way, WA 98063-9777 (US)**

(72) Inventor: **Luo, Mengkui**
**Tacoma**
**Washington 98422 (US)**

(74) Representative: **Hayes, Adrian Chetwynd**
**Boult Wade Tennant,**
**Verulam Gardens**
**70 Gray's Inn Road**
**London WC1X 8BT (GB)**

(54) **Microcrystalline cellulose and method for making**

(57) The present application provides a method of converting a pulp having at least 7 percent by weight hemicelluose and a D. P. of from 200 to about 1100 to a composition comprising microcrystalline cellulose. In the process the pulp is contacted with a treating agent to hydrolyze the cellulose to microcrystalline cellulose which has a high hemicelluose level, a hemicelluose retention of at least 0.65, a brightness of at least 86 and an X-ray crystallinity index of at least 0.65.

EP 1 707 669 A2

## Description

### FIELD

The present application is directed to microcrystalline cellulose, and to methods for making microcrystalline cellulose from pulps having a high hemicellulose content, cellulose having a low average degree of polymerization, and a low copper number.

### BACKGROUND

Cellulose is a polymer of D-glucose and is a structural component of plant cell walls. Cellulose is especially abundant in tree trunks from which it is extracted, converted into pulp, and thereafter utilized to manufacture a variety of products. One of such products, microcrystalline cellulose, is used in the pharmaceutical industry as an excipient in tableting, for creams in pharmaceutical and cosmetics, as a replacement for fat in the food industry as well as a stabilizer and texturizing agent. It is used in many products such as reduced fat salad dressings, dairy products such as cheese, frozen desserts and whipped toppings and bakery products.

Currently available microcrystalline cellulose is produced from high quality wood pulps that have been extensively processed to remove non-cellulose components, especially hemicellulose. These highly processed pulps are referred to as dissolving grade or high alpha (high a) pulps, where the term alpha (a) refers to the percentage of cellulose. Thus, a high alpha pulp contains a high percentage of cellulose, and a correspondingly low percentage of other components, especially hemicellulose.

Typically, microcrystalline cellulose is manufactured by hydrolyzing dissolving grade wood pulp with mineral acids. For this purpose, wood pulp in the range of 92% to 98% alpha cellulose content and a brightness level of 92-95 (ISO) are used as starting material. The wood pulp is then subjected to an acid solution under heat and pressure resulting in small chain polymers or microcrystalline cellulose with an alpha content of at least 98% and the same brightness as the starting material.

Conventional Kraft processes stabilize residual hemicelluloses against further alkaline attack, hence it is not possible to obtain acceptable quality dissolving pulps, i.e., high alpha pulps, through subsequent treatment of Kraft pulp in the bleaching stages. Thus, in order to prepare dissolving type pulps by the Kraft process, it is necessary to give the raw material an acidic pretreatment or a prehydrolysis, before the alkaline pulping stage. A significant amount of material primarily hemicellulose, on the order of 10% or greater of the original wood substance, is solubilized in this acid phase pretreatment and thus process yields drop. Under the prehydrolysis conditions, the cellulose is largely resistant to attack, but the residual hemicelluloses are degraded to a much shorter chain length and can therefore be removed to a large extent in the subsequent Kraft cook by a variety of hemicellulose hydrolysis reactions or by dissolution.

In view of the expense of producing commercial dissolving grade pulps, it is desirable to have alternatives to conventional high alpha dissolving grade pulps suitable for conversion to microcrystalline cellulose but which have a low alpha (e.g., high yield). The desired low alpha pulps have a desirably low copper number, a desirably low lignin content and a desirably low transition metal content.

A relatively low copper number, reflective of the relative carbonyl content of the cellulose, is a desirable property of a pulp that is to be used to make microcrystalline cellulose because it is generally believed that a high copper number causes cellulose brightness reversion.

A low transition metal content is also a desirable property of a pulp that is to be used to make microcrystalline cellulose because, for example, transition metals accelerate the undesirable degradation of cellulose which results in brightness loss.

Presently, the forest industry generates vast quantities of sawdust byproduct in the normal course of day-to-day wood processing. While some sawdust has found its way into pulping mills that use digesters made to be used with sawdust, a large proportion of the total byproduct sawdust remains unused. Even so, the conventional pulp made from sawdust in M&D or Pandia digesters is considered unsuitable to be used as a dissolving type pulp. One of the drawbacks to using sawdust in a digester suited to make high alpha pulp is that the recycle stream continuously plugs with the sawdust particulates. The typical pulp currently being made from sawdust does not have a high alpha content or viscosity level suitable for use as dissolving pulp. This typical pulp also contains contaminates (dirt, metal or plastic) that are unacceptable for dissolving grade pulps.

It would be advantageous to utilize a high yield, low alpha pulp using the conventional sawdust digesters that would be useful for making microcrystalline cellulose from the byproducts of wood processing, without any of the heretofore mentioned drawbacks.

It would be further advantageous to utilize a low cost pulp that is useful for making microcrystalline cellulose from wood of normal specific gravity and underutilized wood, namely from the core wood or young or juvenile wood such as thinnings, hereafter referred to as low specific gravity wood. Thus presenting a low cost alternative to the highly refined high-alpha pulps used for making microcrystalline cellulose.

## DESCRIPTION

In one embodiment of the invention a method for making a composition comprising microcrystalline cellulose from a high hemicellulose pulp, is provided. The pulp used as a starting material for conversion to microcrystalline cellulose has at least 7 percent by weight hemicellulose, and an average degree of polymerization (D.P.) of from about 200 to about 1100. The high hemicellulose pulp is contacted with a treating agent to yield a composition comprising microcrystalline cellulose with a LODP of at least 195 and less than 245 and a X-ray crystallinity index of at least 0.65. As defined herein a treating agent is an agent that is used to hydrolyze the pulp to a LODP and is selected from a group of inorganic acids consisting of hydrochloric, nitric, phosphoric, sulfuric and mixtures thereof. Other acids may also be used.

In another embodiment, a method for making a composition comprising microcrystalline cellulose from a high hemicellulose pulp, is provided. As used herein, "high hemicelluose" refers to greater than 7 percent by weight hemicellulose in the pulp. The pulp used as a starting material for the microcrystalline cellulose has at least 11 percent by weight hemicellulose, and an average degree of polymerization (D.P.) of from about 600 to about 1050. The high hemicellulose pulp is contacted with a treating agent to yield composition comprising microcrystalline cellulose.

In another embodiment a composition comprising a microcrystalline cellulose is provided which has a LODP of at least 195 but less than 240, a hemicellulose level of at least 11 percent, yet a brightness of at least 86. LODP as used herein refers to the leveling off degree of polymerization and is defined as a time of 15 minutes in 2.5N HCl at boiling which is the optimum point at which to measure both weight loss on hydrolysis and the leveling of degree of polymerization. In the LODP there is a relatively constant degree of polymerization reached after very prolonged mild conditions of hydrolysis or very short periods of drastic hydrolysis. The method is described below.

In another embodiment a composition comprising microcrystalline cellulose with X-ray crystallinity indices of at least 0.65 is provided.

In yet another embodiment, a composition comprising microcrystalline cellulose with a xylan level of at least 2.5 percent is provide.

A further embodiment a composition comprising microcrystalline cellulose with a mannan level of at least 4 percent is provided.

Compositions comprising microcellulose have brightness levels of at least 86.

The pulp with at least 7 percent hemicellulose and a D.P of from about 200 to 1100 is prepared from sawdust according to the method described in U.S. 6,605,350 and the claims thereof and is given in Example 1, below. The method is representative of the preparation of pulp with varying D.P levels. It is recognized that one skilled in the art can made suitable adjustments to arrive at various D.P. levels.

As used herein, "sawdust" includes any collection of small wood particles from any known softwood or hardwood. The particle size distribution of sawdust from lumber sawing operations is determined by sawing variables such as saw thickness, saw speed, saw tooth design, and saw diameter. As such, the size distribution will vary depending on the design of the lumber sawing operation producing the sawdust.

As used herein, sawdust is defined to mean any collection of wood particles from any softwood or hardwood having no more than a 50% fraction of a representative sample retained on a 1/4 inch screen as measured by TAPPI standard T233. Sawdust may include conventionally sized chips of all sizes provided that the fiber sizes of the wood chips meet the fiber length classification for a sawdust as defined. While the examples given above have been described with reference to particular embodiments, they are not meant to be limiting of the application which makes use of a raw material having small wood particles, which also may include any quantity of conventionally sized wood chips as part of the 50% fraction retained on a 1/4 mesh screen.

Wood from softwood or hardwood species generally includes three major components: cellulose, hemicellulose and lignin. Cellulose makes up about 50% of the woody structure of plants and is an unbranched polymer of D-glucose monomers. Individual cellulose polymer chains associate to form thicker microfibrils which, in turn, associate to form fibrils which are arranged into bundles. The bundles form fibers which are visible as components of the plant cell wall when viewed at high magnification under a light microscope. Cellulose is highly crystalline as a result of extensive intermolecular and intramolecular hydrogen bonding.

The alkaline pulping step that is carried out in a continuous digester in the Kraft process, can be used to provide a continuously digested brownstock alkaline pulp that can be further treated as described in the example below to provide an alkaline pulp useful for making microcrystalline cellulose.

Characteristics of a continuously digested brownstock alkaline pulp suitable for use in the D.P. reduction step in bleaching include a pulp having a hemicellulose content of at least 7% by weight, from 7% to about 30% by weight, or from 7% to about 25% by weight, or from about 9% to about 20% by weight; an average D.P. of cellulose of from about 600 to about 1800; a kappa number less than about 40, in another case less than 30 and in another case less than 25, and a copper number less than about 2.0. As used herein, the term "percent (or %) by weight" or "weight percent", or grammatical variants thereof, when applied to the hemicellulose or lignin content of pulp, means weight percentage relative to the dry weight of the pulp.

The term "degree of polymerization" (abbreviated as D.P.) refers to the number of D-glucose monomers in a cellulose molecule. Thus, the term "average degree of polymerization", or "average D.P.", refers to the average number of D-glucose molecules per cellulose polymer in a population of cellulose polymers.

The hemicellulose content of the treated alkaline pulp, expressed as a weight percentage is at least 7% by weight; preferably from about 7% by weight to about 25% by weight; more preferably from about 7% by weight to about 20% by weight; most preferably from about 10% by weight to about 17% by weight. As used herein, the term "percent (or %) by weight" or "weight percentage", or grammatical equivalents thereof, when applied to the hemicellulose or lignin content of treated pulp, means weight percentage relative to the dry weight of the treated pulp.

Pulps suitable for conversion to microcrystalline cellulose have a difference between the $R_{10}$ and $R_{18}$ ($\Delta R$), (or $R_{18}$-$R_{10}$) of at least 3 percent to about 6 percent. $R_{10}$ refers to the residual undissolved material, as a weight percent of the total sample, that is left after attempting to dissolve the pulp in a 10% caustic solution. $R_{18}$ refers to the residual amount of undissolved material, as a weight percent, left after attempting to dissolve the pulp in an 18% caustic solution. Generally, in a 10% caustic solution, hemicellulose and chemically degraded short chain cellulose are dissolved and removed in solution. In contrast, generally only hemicellulose is dissolved and removed in an 18% caustic solution. Thus, the difference between the $R_{10}$ value and the $R_{18}$ value ($\Delta R$), represents the amount of chemically degraded short chained cellulose that is present in the pulp sample.

The pulp formed in accordance with the method which have been treated in order to reduce their average degree of polymerization values without substantially decreasing the hemicellulose content or the copper number for the pulp can be produced by contacting the pulp in a reactor with an oxidant under conditions suitable to achieve the desired results described above. Suitable reactors include reactors conventionally used as oxygen reactors in a Kraft process. Examples of reactors capable of carrying out the contacting of the pulp with the oxidant are described in U.S. Patent Nos. 4,295,925; 4,295,926; 4,298,426; 4,295,927. Unlike conventional oxygen reactors which are configured and operated under conditions that preferably do not decrease the average degree of polymerization of cellulose while at the same time remove lignin, applicants' method is designed to operate a reactor under conditions that reduce the average degree of polymerization of the cellulose without substantially reducing the hemicellulose content or increasing the copper number of the cellulose. The reactor can be a high consistency reactor wherein the consistency of the feedstream to the reactor is greater than about 20% or it can be a medium consistency reactor where the consistency ranges between about 8% up to about 20%. The conditions under which a high consistency reactor or a medium consistency reactor is typically operated in order to achieve the desired results relate primarily to operation of the high consistency reactor at a temperature that is slightly higher than the temperature at which the medium consistency reactor can be operated as described below in more detail.

Oxidants used in the reactor include hydrogen peroxide alone or a combination of oxygen and hydrogen peroxide. The amount of oxidant employed should provide the desired D.P. reduction and lignin removal given the time and temperature conditions employed. Examples of suitable ranges for oxygen and hydrogen peroxide are given below. For a high consistency reactor, the oxygen is present in an amount ranging from about 0 to the maximum pressure rating for the reactor, from about 0 to about 586 kPa (85 psig) in one case, and from about 276 kPa (40 psig) to about 414 kPa (60 psig) in another case. The hydrogen peroxide may be present in an amount ranging from greater than about 0.75 weight percent up to about 5.0 weight percent, or from about 1.0 to about 2.5 weight percent of the pulp.

In medium consistency reactors, the oxygen can be present in an amount ranging from about 0 to about 50 g/kg (100 pounds per ton) of the pulp, in another case from about 25 g/kg to about 40 g/kg (50 to about 80 pounds per ton) of dry pulp. The hydrogen peroxide may be present in an amount ranging from greater than about 0.75 weight percent up to about 5 weight percent, more preferably from about 1.0 to about 2.5 weight percent.

In addition to the oxidants, caustic is preferably contacted with the pulp in the reactor as a buffering agent. The source of caustic can be sodium hydroxide or other materials such as unoxidized white liquor or oxidized white liquor. The amount of caustic added will depend in part upon the kappa number of the untreated pulp. Generally, as the kappa number increases, more caustic is added. The amount of caustic introduced can vary depending on process conditions, with an amount of 4 to 5 weight percent or greater being suitable.

The temperature at which the reactor is operated will in part depend upon the concentration of the oxidants. When the oxidants are used in amounts that fall within the ranges described above, temperatures on the order of about 80°C up to about 130°C are suitable. It should be understood that the temperature in the reactor may vary over time as the reactions that occur therein tend to be exothermic which will most likely result in an increase of the temperature of the reactor. It should be understood that temperatures and oxidant concentrations falling outside the ranges described above may still provide suitable results depending on the various permutations of the amounts of oxidant used and the temperatures.

The stage or stages used to reduce the average degree of polymerization of the pulp without substantially decreasing the hemicellulose content or increasing the copper number of the pulp remains alkaline through the stage or stages. Preferably, the pH of the stage or stages used to achieve the D.P. reduction described above is greater than about 8.0 throughout the D.P. reduction process. It should be understood that pH levels above or below the noted ranges may provide satisfactory results if the temperature or concentration of oxidant is modified as necessary.

One method of treating pulp in order to reduce the average D.P. of the cellulose without substantially reducing the hemicellulose content of the pulp and without substantially increasing the copper number of the pulp is to treat the pulp in a series of stages. In one case, the pulp undergoes treatment in a DEDE sequence. E stages are the principal stages used in lowering the average D.P. of the cellulose without substantially reducing the hemi-cellulose content of the pulp or raising the copper number.

In the first D stage, the pulp consistency is adjusted to about 10% with the addition of water. Chlorine dioxide corresponding to an amount equivalent to about 14 g/kg (28.4 pounds per ton) of pulp is added to the pulp. The mixture is held at a temperature of about 75 °C for about 1.5 hours.

In the second E stage, the pulp consistency is maintained at about 10% with the addition of water. Sodium hydroxide was charged to the reactor in an amount equivalent to about 15 g/kg (30 pounds per ton) of pulp. Hydrogen peroxide was charged to the reactor in an amount equivalent to about 30 g/kg (60 pounds per ton) of pulp. The mixture is held for about 1.5 hours at a temperature of about 88 °C.

In the third D stage, chlorine dioxide is charged to the pulp in an amount equivalent to about 9.5 g/kg (19 pounds per ton) of pulp, and the pulp was again diluted to bring the consistency to about 10%. The mixture was held for 1.5 hours at about 75°C.

In the fourth EP stage, sodium hydroxide was charged to the pulp with water being added to achieve a consistency of about 10%. The sodium hydroxide charge was equivalent to about 15 g/kg (30 pounds per ton) of pulp. Hydrogen peroxide is also charged in an amount equivalent of about 19.9 g/kg (40 pounds per ton) of pulp. The mixture was held for about 1.5 hours at a temperature of about 88 °C.

The following example, Example 1, and subsequent bleach stage conditions are representative of making a pulp suitable for conversion to microcrystalline cellulose. It is recognized that one skilled in the art can apply these conditions to mill processing conditions to arrive at D.P. levels cited in this application.

Example 1

Brownstock sawdust pulp was produced in an industrial scale M&D digester. The digester was operated at a temperature of about 182°C, and average residence time in the digester was about 60 minutes. White liquor was used as the cooking liquor in the digester. The white liquor had a total titratable alkali (TTA) of 115.2 grams per liter as $Na_2O$, an active alkali (AA) of 99.2 grams per liter as $Na_2O$, an effective alkali (EA) of 81.6 grams per liter as $Na_2O$. Sulfidity of the white liquor was 28% of TTA. Specific gravity of the white liquor was 1.15.

Northern Softwood sawdust unbleached alkaline Kraft pulp (main wood species were Douglas fir, Spruce and Lodgepole pine), produced under the stated conditions, with a kappa number of 21.0 (TAPPI Standard T236 cm-85 and a viscosity of 110 cp (TAPPI T230) (D.P. of 1264), a copper number of 0.6 and a hemicellulose content of 14.1% 1.5% was treated with chlorine dioxide in a first D stage. $D_1$ STAGE

The $D_1$ stage treated pulp processed by pin fluffing the sawdust brownstock pulp, and then transferring the pulp to a polypropylene bag. The consistency of the pulp in the polypropylene bag was adjusted to ten percent with the addition of water. Chlorine dioxide corresponding to an amount equivalent to 14.2 g/kg (28.4 pounds per ton) of pulp was introduced to the diluted pulp by dissolving the chlorine dioxide in the water used to adjust the consistency of the pulp in the bag. The bag was sealed and mixed and then held at 75°C for 1.5 hours in a water bath. The exit pH was 1.9 and no $C1O_2$ residual was detected. The pulp D.P. was 1258. The pulp was removed and washed with deionized water. The pulp was next treated in an Ep stage.

$E_{P1}$ STAGE

The washed pulp from $D_1$ stage was then placed in a fresh polypropylene bag and caustic was introduced with one-half of the amount of water necessary to provide a consistency of ten percent. Hydrogen peroxide was mixed with the other one-half of the dilution water and added to the bag. The hydrogen peroxide charge was equivalent to 30 g/kg (60 pounds per ton) of pulp and the caustic dose was equivalent to 15 g/kg (30 pounds per ton) of pulp. The bag was sealed and mixed and held for 1.5 hours at 88°C in a water bath. Only a trace of residual hydrogen peroxide was detected. The exit pH was 8.1 and pulp D.P. was 905. After removing the pulp from the bag and washing it with water, the mat was filtered and then placed back into the polypropylene bag and broken up by hand. The pulp was next treated in a second $D_2$.

D<sub>2</sub> STAGE

Chlorine dioxide was introduced to the pulp in an amount equivalent to 9.5 g/kg (19 pounds per ton) of pulp with the dilution water necessary to provide a consistency of 10 percent. The bag was sealed and mixed, and then held for 1.5 hours at 75°C in a water bath. The exit pH was 2.6, and the pulp D.P. was 923. After removing the pulp from the bag and washing it with water, the mat was filtered and then placed back into the polypropylene bag and broken up by hand. The pulp was next treated in a second EP stage.

E<sub>P2</sub> STAGE

The washed pulp was then placed in a fresh polypropylene bag and caustic was introduced with one-half of the amount of water necessary to provide a consistency of ten percent. Hydrogen peroxide was mixed with the other one-half of the dilution water and added to the bag. The hydrogen peroxide charge was equivalent to 20 g/kg (40 pounds per ton) of pulp and the caustic dose was equivalent to 15 g/kg (30 pounds per ton) of pulp. The bag was sealed and mixed and held for 1.5 hours at 88°C in a water bath. Residual hydrogen peroxide was detected at <5g/kg (10 pounds per ton). Exit pH was 11.7 and pulp D.P. was 579.

Pulp with varying D.P. levels was contacted with hyrodrochloric acid to yield microcrystalline cellulose with varying LODP levels and other properties. Tables 1 and 2 cite properties of the starting pulp and properties of the microcrystalline cellulose.

In another embodiment, specific gravity wood of approximately 0.44 to 0.46 g/cm$^3$ and in chip form is converted to a high hemicellulose pulp with a D.P. of from about 600 to about 1050 and then contacted with a treating agent to reduce the D. P. to a LODP range of from about 195 to about 240 which is suitable for use in microcrystalline cellulose. The high hemicellulose pulp is prepared from this wood according to the method described in U.S. 6,491,788, portions of which are included herein and given in Examples 2-5 below. The examples are representative of general processing conditions that can be used in making the pulp used for contacting with a treating agent to make microcrystalline cellulose. It is realized that one skilled in the art can make adjustments in the process conditions to arrive at D.P. levels of the pulp cited in the Table 1.

Tables 1 and 2 cite properties of the starting pulp and the microcrystalline cellulose.

In preparation of pulps suitable for conversion to microcrystalline cellulose, the digester kappa target was 17. The brownstock pulp viscosity was below 300 cP in most part. Kappa and viscosity reductions were achieved by increasing all temperature inputs to the digester and increasing the effective alkali / wood.

The oxygen reactor conditions were set to reduce as much pulp viscosity as possible. The target was for an 80% reduction in viscosity. The alkali source was 100% caustic. The caustic strength was increased from the normal 10% concentration to 12% to maximize the chemical dosage in the reactor. The temperature of the top tray of the reactor was set at the maximum allowed by the oxygen cut off safety control system. The top tray temperature average was 129°C, (265 °F). Caustic addition was increased to ~30 g/kg (60lb/t). Peroxide was added~20 g/kg (40lb/t) for the duration of the production in the bleach plant. E<sub>OP</sub> tower temperature of 85-86°C (185-187 °F) was maintained.

In another embodiment, a pulp with at least 7 percent by weight hemicellulose which has been made from 0.44-0.46 g/cm$^3$ gravity wood according to the procedure below, is contacted further with a treating agent to make a composition comprising microcrystalline cellulose with a LODP of from at least 195 to less than 245. and a crystallinity index of at least 0.65.

In yet another embodiment, a composition comprising microcrystalline celluose has a LODP of at least 210 but less than 235.

As used herein, specific gravity is the average specific gravity of any population of wood feedstock material. The solid wood density may be determined using the green volume, the oven-dry volume, or intermediate volumes. The wood chips used in practicing the application can be made from any cellulose source. A suitable range of low specific gravity wood used for the present application is any wood material having a specific gravity about 0.44-0.46 g/cm$^3$ although normal specific gravity wood can be used. As noted in Table 1, Southern pine was used in this application. Lower specific gravity wood results in a lower brownstock pulp viscosity, which is believed to reduce the use of bleaching chemicals in the bleach plant.

Hemicellulose is measured by an HPLC method described below and represents the sum of the xylan and mannan levels as a percent of the total weight.

In one embodiment the composition comprising microcrystalline cellulose has a hemicellulose level of at least 8 percent. In another embodiment the hemicellulose level of the microcrystalline cellulose is at least 9 percent and in yet another embodiment the hemicellulose level is at least 10 percent.

A low copper number is desirable because it is generally believed that a high copper number causes cellulose brightness to revert.

In one embodiment of the invention the brightness of the microcrystalline cellulose is greater than 86 and in another embodiment the brightness is greater than 88 and in yet another embodiment the brightness is greater than 90.

Transition metals are undesirable in pulp because they accelerate the degradation of cellulose. Examples of transition metals commonly found in bleached pulps include iron, copper, and manganese.

In one embodiment the viscosity of the composition comprising microcrystalline cellulose is greater than 13 and in another embodiment the hemicellulose retention is at least 0.65.

The following examples illustrate the method for making pulp suitable for conversion to microcrystalline cellulose but should not be construed to limit the conditions used to make the pulp suitable for conversion to microcrystalline cellulose. It is recognized that one skilled in the art could readily adjust processing conditions to achieve various D.P. levels.

EXAMPLE 2

Southern pine unbleached alkaline Kraft pulp with a kappa number of 26.4 (TAPPI Standard T236 cm-85 and a viscosity of 302 cP (TAPPI T230) (D.P of 1593), a copper number of 0.6 and a hemicellulose content of 13.5% $\pm$ 2.0% was treated with oxygen in a pressure vessel with high consistency mixing capabilities. The mixture was stirred 40 slowly for ten seconds every minute. The vessel had been preheated before pulp addition to about 90°C. An amount of sodium hydroxide (NaOH) equivalent to 50 g/kg (100 pounds per ton) of pulp was added to the alkaline pulp. The mixture was stirred for 20 seconds. The reaction vessel was then closed and the pressure was increased to 414 kPa (60 psig) by introducing oxygen into the pressure vessel. The mixer was run for 60 minutes as described above. Water was present in the vessel in an amount sufficient to provide a 25% consistency.

After the 60 minutes, the stirring was stopped and the pulp was removed from the pressure vessel and washed. The resulting washed pulp viscosity was 46 cp (D.P. of 963). The treated pulp had a copper number of about 0.5 measured by TAPPI standard T430, a hemicellulose content of 13.5 percent $\pm$ 2.0%, a kappa number of 10.6, and the $\Delta R$ for the treated pulp was 0.4.

EXAMPLE 3

The procedure of Example 2 was repeated with the addition of hydrogen peroxide after the addition of sodium hydroxide. The pressure vessel was run for 60 minutes at a temperature of 115°C. The peroxide was added in an amount of 10g/kg (20 pounds per ton of pulp).

The treated pulp had a viscosity of 30 cp (D.P. 810), a copper number of 0.3, and a hemicellulose content of 13.5 $\pm$ 2.0%. The pulp exhibited a kappa number of 7.0.

EXAMPLE 4

The treated pulp of Example 2 was bleached to determine the effect of bleaching on the D.P. of the treated pulp. The treated pulp of Example 1 was subjected to a DED bleaching sequence comprising a chlorine dioxide $D_1$ stage, a sodium hydroxide/hydrogen peroxide E stage and a chlorine dioxide $D_2$ stage.

$D_1$ STAGE

The $D_1$ stage treated pulp processed in accordance with Example 2 by washing it three times with distilled water, pin fluffing the pulp, and then transferring the pulp to a polypropylene bag. The consistency of the pulp in the polypropylene bag was adjusted to ten percent with the addition of water. Chlorine dioxide corresponding to an amount equivalent to 14 g/kg (28 pounds per ton) of pulp was introduced to the diluted pulp by dissolving the chlorine dioxide in the water used to adjust the consistency of the pulp in the bag. The bag was sealed and mixed and then held at 65°C for 15 minutes in a water bath. The pulp was removed and washed with deionized water.

E STAGE

The washed pulp was then placed in a fresh polypropylene bag and caustic was introduced with one-half of the amount of water necessary to provide a consistency of ten of percent. Hydrogen peroxide was mixed with the other one-half of the dilution water and added to the bag. The hydrogen peroxide charge was equivalent to 10 g/kg (20 pounds per ton) of pulp. The bag was sealed and mixed and held for one hour at 88°C in a water bath. After removing the pulp from the bag and washing it with water, the mat was filtered and then placed back into the polypropylene bag and broken up by hand.

D$_2$ STAGE

Chlorine dioxide was introduced to the pulp in an amount equivalent to 9.5 g/kg (19 pounds per ton) of pulp with the dilution water necessary to provide a consistency of percent. The bag was sealed and mixed, and then held for three hours at 80°C in a water bath.

The resulting pulp was removed from the bag and dried. The bleached pulp had a pulp viscosity of about 40 cp (D.P of 914), a TAPPI brightness of 88, a copper number of 0.6, a $\Delta$R of 1.4 and a hemicellulose content of 13.0%. The kappa number of the pulp prior to the D, stage was 10.6.

EXAMPLE 5

This example treats a pulp of Example 3 with the bleaching sequence of Example 4. The resulting pulp exhibited a viscosity of about 22 cp (D.P of 697), a TAPPI brightness of 88.3, a copper number of 0.6, a $\Delta$R of 2.0, and a hemicellulose content of 13.0%. The kappa number of the pulp prior to the D$_1$ stage was 7.0.

Methods

Cellulose D.P. was determined by ASTM D 1795. Viscosity of the microcrystalline cellulose was determined by homogenizing a 1.2 percent solution of microcrystalline cellulose in water at room temperature using a Brinkman Polytron with a speed of 20-25 revolutions / min. and determining the viscosity in a Brookfield viscometer using a No. 1 spindle. The X-ray crystallinity index was determined by the method of Segal et. al, Textile Research Journal 29,786 (1959). Brightness was determined by placing the microcrystalline cellulose in a ring with a diameter of approximately 2 inches and a height of ¼ inch, pressing the sample in the cylinder with a metal plunger by hand and determining the brightness by TAPPI T525.

Hemicellulose retention was determined by dividing the sum of the percent xylan and percent mannan by the sum of the percent xylan and percent mannan in the pulp and subtracting the resulting value from one.

LODP Method

112.5 gram of 2.5N HCl was added to a 250 ml 3 neck flask equipped with stirrer and reflux condenser. The flask was heated in an oil bath until the liquid began to boil. 12.5 gram pulp (cut to 1x1 cm square) was added to the contents of the flask quickly and the start the time noted. The slurry was mixed for 15 minutes, the stirring stopped , and the slurry was poured into 125 ml cold DI water. 100 ml water was used to rinse the flask to collect all microcrystalline cellulose. The suspension was filtered under vacuum to remove the water the microcrystalline cellulose cake collected and the microcrystalline cellulose again washed with DI water (1000 ml). The slurry was neutralized with 0.1 N NH$_4$OH to pH about 4-7, filtered, washed with water (rinse) and then the microcrystalline cellulose cake was dispersed in 200 ml ethanol, kept for 0.5 hour, filtered and air dried.

Method for Preparing Wood Pulp for Analysis of Pulp Sugars by Chromatography

In this example, a method for preparing wood pulp for analysis of pulp sugars by chromatography is described.

This method is applicable for the preparation of wood pulp for the analysis of pulp sugars with high performance liquid chromatography.

Polymers of pulp or wood sugars are converted to monomers by sulfuric acid digestion. Pulp is ground, weighed, hydrolyzed with sulfuric acid, diluted to 200-mL final volume, filtered, diluted again (1.0 mL + 8.0 mL H$_2$O) in preparation for analysis by high performance liquid chromatography (HPLC).

60-100 mg of sample is the minimum required for a single analysis. 1-2 grams are preferred to avoid errors related to homogeneity.

Sample Handling. None for the air-dried sample. If the sample is wet, allow it air dry or put it in the oven at 25 $\pm$ 5 °C until dried.

Equipment

Autoclave.
10-mL polyethylene vials for chromatography method.
Gyrotory Water-Bath Shaker, Model G76.
Balance capable of weighing to $\pm$ 0.01 mg, such as Mettler HL52 Analytical Balance.
 Intermediate Thomas-Wiley Laboratory Mill, 20 mesh screen.

NAC 1506 vacuum oven.
Brinkman Chemical-resistant bottletop dispenser, 5-mL capacity.
50-mL bottletop dispenser, EM Sciences.
10-mL plastic disposable syringes, VWR.
Aluminum foil cut into 6 cm squares.
Kimwipes cut into 5 cm squares.
16-mL amber glass storage vials.
0.45-$\mu$ GHP filters, Gelman.
Adjustable 1-mL positive displacement pipette and tips, Gilson.
Heavy-walled test tubes with pouring lip, 2.5 x 20 cm.

Reagents.

72% Sulfuric Acid Solution ($H_2SO_4$) - transfer 183 ml of water into a 2-L Erlenmeyer flask. Pack the flask in ice bath and allow to cool. Slowly and cautiously pour, with swirling, 470 ml of 96.6% $H_2SO_4$ into the flask.
Fucose, internal standard. 2.0 $\pm$ 1 g of Fucose [2438-80-4] is dissolved in 100.0 mL $H_2O$ giving a concentration of 20.0 $\pm$ 1 mg/ml. This standard is stored in the LC refrigerator.
Dissolving Pulp standard - T510 Control pulp.

Kraft control pulp standard.

Weigh each sugar separately to 4 significant digits in mg and transfer to a 100-mL volumetric flask. Dissolve sugars in a small amount of water. Take to -volume with water, mix well and transfer contents to a clean, 4-oz. amber bottle.
Kraft Pulp Standard Stock Solution. Weigh each sugar separately to 4 significant digits in mg and transfer to a 100-ml volumetric flask. Dissolve sugars in a small amount of water. Take to volume with water, mix well and transfer contents to a clean, 4-oz. amber bottle.

Procedure.

All references to $H_2O$ is Millipore $H_2O$
Sample Preparation. Grind -0.5-1 g pulp with Wiley Mill 20 Mesh screen size collecting ground sample in 50-mL beaker. Place ~200 mg of sample (in duplicate, if requested) in 40-mL TEFLON container. Place in the NAC 1506 vacuum oven. Latch door. Close bleeding valve (on top of vacuum oven on left). Turn on temperature switch, checking for proper temperature setting. Open vacuum valve (on top of vacuum oven on right). Open main vacuum valve. Dry in the vacuum oven overnight at 50 $\pm$ 5°C at 125 mm Hg.
Turn off main vacuum valve and oven vacuum valve. Open bleeding valve. Turn off the temperature switch. Wait for the pressure to return to 760 mm Hg.
Remove samples from vacuum oven. Cool samples in the dessicator for 30 min.
Remove the standards from the refrigerator and allow to come to room temperature.
Turn on heat for Gyrotory Water-Bath Shaker. The settings are as follows:

Heat: High
Control Thermostat: 30°C
Safety thermostat: 25°C
Speed: 1.48
Shaker: Off

Check the bath-water level and fill if necessary so that the samples are below the water level.
Tare TEFLON container and sample to 0.000. Using tweezers, place 60-100 mg sample into a 100-mL test tube. Reweigh the container and sample and record the negative weight.
Add 1.0 mL 72% $H_2SO_4$ to test tube with the Brinkman dispenser. Stir with the rounded end of a stirring rod for one minute being sure to get all the fibers wet and crush all clumps.
Place the test tube in gyratory water-bath shaker. Stir each sample 3 times, once between 20-40 min, again between 40-60 min, and again between 60-80 min. Remove the sample after 90 min.
While the samples are heating, calibrate the Brinkman dispenser for dispensing 28 mL of water. Tare a beaker to 0.00g. Dispense 28 $\pm$ 0.1 g water. Weigh water and adjust the Brinkmann dispenser accordingly.
At 90 min, rinse the stirring rod into sample with 28 $\pm$ 0.1 g $H_2O$.
Calibrate automatic pipette to 1 $\pm$ 0.001 mL. Dispense 1.000 mL of internal standard (Fucose) into sample.

Vortex mix the solution.

Tightly cover with aluminum foil to be sure that the foil does not come off in the autoclave.

Close drain on autoclave. Add 4 L of water to autoclave. Place the test tube rack with samples and standards on the shelf in the autoclave. Close and lock the door. Set timer to '0'. The timer will be set for 60 min. Check autoclave after 20 minutes to be sure the pressure is 14-16 psi (95-105 kPa) and the temperature is > 260 °F (127°C).

After 75 minutes, remove the samples from the autoclave.

Cool the samples for one hour.

Pour the sample into a 200-ml, volumetric flask. Using a calibrated Brinkmann Dispenser, rinse sides of test tube with 28.0-mL aliquot of H2O. Vortex. Pour into the volumetric flask. Repeat with two more aliquots of $H_2O$, rinsing the side of the test tube. A calibrated volume of dispenser water is used before digesting so that each sample and standard are treated exactly the same way. After digesting, the dispenser is already set at 28.0 mL. Rinsing with this amount insures that the side of the test tube is rinsed well.

Bring the flask to final volume pouring $H_2O$ from a beaker into the flask and adjusting meniscus with disposable pipette. Stopper, invert and shake 3 times.

Calibrate Brinkmann Dispenser to 8.0 ± 0.01 mL. Dispense 8.0 mL of $H_2O$ into a Dionex vial.

Filter an aliquot of the sample into labeled 16-mL amber vial through GHP 0.45-μ filter with disposable 10-mL syringe. Transfer the label from the volumetric flask to the vial.

Add 1.000 mL aliquot of the sample with a 1.000-mL syringe into the Dionex vial. Cap the Dionex and amber vials.

Kraft Pulp Standards:

In four 25-mL volumetric flasks, add Kraft Pulp Standard respectively:

0.400 mL
0.800 mL
1.200 mL
1.600 mL

Add 125 μL of 72% $H_2SO_4$ to each standard. Add 125 μL of Fucose internal standard to each standard. Add 7 mL of $H_2O$ to each standard. Cover with aluminum foil and autoclave with the samples.

Bring to final volume with $H_2O$.

Filter the standard into a labeled 16-mL amber vial through a GHP filter with a disposable 10-mL syringe.

Add 1.000 mL of the standard with 1.000-mL syringe to 8.0 mL of $H_2O$ in the Dionex vial. Cap the Dionex and amber vials.

T510 Control Dissolving Pulp Standards:

In four 25-mL volumetric flasks, add T510 Control Dissolving Pulp Stock respectively:

0.400 mL
0.800 mL
1.200 mL
1.600 mL

Add 125 μL of 72% $H_2SO_4$ to each standard. Add 125 μL of Fucose internal standard to each standard. Add 7 mL of $H_2O$ to each standard. Cover with aluminum foil and autoclave with the samples. Bring to final volume with $H_2O$.

Filter standard into a labeled 16-mL amber vial through a GHP filter with a disposable 10-mL syringe. Add 1.0 mL of the standard with a 1.0-mL Hamilton syringe to 8.0 mL $H_2O$ in the Dionex vial. Cap the Dionex and amber vials.

Method for Determining Pulp Sugar/Lignin from Wood Pulp

acid digestion. Pulp is ground, weighed, hydrolyzed with sulfuric acid, diluted to 200-mL final volume, filtered (residue solid is considered as lignin), diluted again (1.0 ml + 8.0 ml $H_2O$) and analyzed with high performance liquid chromatography (HPLC).

Chromatography Equipment.

GP 50 Dionex metal free gradient pump with four solvent inlets.

Dionex ED 40 pulsed amperometric detector with gold working electrode and solid state reference electrode.

Dionex autosampler AS 50 with a thermal compartment containing all the columns, the ED 40 cell and the injector loop.

Dionex PC 10 Pneumatic Solvent Addition apparatus with 1L plastic bottle.

Helium tank, minimum 99.99%.

4 x 2L Dionex polyethylene solvent bottles with solvent outlet and helium gas inlet caps.

CarboPac PA1 (Dionex P/N 035391) ion exchange column 4 mm x 250 mm.

CarboPac PA1 guard column (Dionex P/N 043096) 4 mm x 50 mm.

Amino trap column (Dionex P/N 046122) 4 mm x 50 mm.

Millipore solvent filtration apparatus with Type HA 0.45u filters.

Chromatography Reagents.

Distilled deionized water.

JT Baker 50% sodium hydroxide solution.

2 M stock solution of JT Baker sodium acetate trihydrate Ultrapure Bioreagent (136.1 g/L).

Procedure.

Sample preparation as described by digestion method described in Example 7.

Note: All references to $H_2O$ is Millipore $H_2O$.

Solvent A is distilled and deionized water sparged with helium for 20 minutes before installing under a blanket of helium.

Solvent B is 2L of 400 mM NaOH. 1960 mL water is sparged with helium for 20 minutes. 41.6 mL 50% NaOH is added with a 50 mL plastic pipette while still sparging. Minimize disturbance of the 50% NaOH, and draw it from the middle of the liquid. This ensures that $Na_2CO_3$ contamination is reduced. Use the sparger to mix the reagent, then transfer the bottle to the solvent B position and blanket with helium.

Solvent D is 200 mM sodium acetate. Weigh 49 g sodium acetate trihydrate (J.T. Baker Ultrapure Bioreagent) into about 1500 mL water. Stir on stir plate until dissolved. Adjust to 1800 mL Filter this into a 2000 mL sidearm flask using the Millipore filtration apparatus with a 0.45u Type HA membrane. Add this to the solvent D bottle, then sparge with helium for 20 minutes. Transfer the bottle to the solvent D position and blanket with helium.

The solvent addition solvent is 1L of 200 mM NaOH. This is added postcolumn to enable the detection of sugars as anions at pH 14. Add 10.4 mL of 50% NaOH to 1L water. If enough reagent is left over from the previous run, 500 mL water plus 5.2 mL 50% NaOH may be used. Add the reagent to the PC10 Pneumatic Solvent Addition apparatus.

Chromatograph Setup. (Use select keys on instrument panel to toggle between remote/local and direct/schedule control.)

With pump flow composite set at solvent A 40%, solvent B 30% and solvent D 30%, set flow rate to 1 mL/min. Open pressure transducer waste valve, then the Priming Block Luer Port valve. Enable the Prime function and draw off -10 mL solvent with a plastic syringe. Disable the Prime function, close purge valve and then close drawoff valve. Repeat twice more.

Set pump to 50/50 Solvent A/Solvent B. Run at 1 mL/min for 20 minutes to wash the column, or 0.2 mL/min for a couple of hours. Turn on the ED40 detector cell. Set the temperature function on the AS50 to 25°C.

Set up the AS 50 schedule. All PeakNet main Menu files relevant to pulp sugars are in the psugar folder with subfolders Methods, Schedules and Data. The schedules have the extension .sas. Use a prior schedule as a template. Three injections of an H2SO$_4$ blank (diluted to the same concentration as the samples) are made first; all other vials have one injection each. Injection volume is 5 $\mu$L for all samples, injection type is "Partial", cut volume is 10 $\mu$L, syringe speed is 3, all samples and standards are of Sample Type "Sample", the current instrument method is sugarsgradient4.met, the data file storage label is "data", and Dilution, Weight and Int. Std. values are all set equal to 1.

Run the four standards at the beginning and the end of sample sets with more than four samples.

Run samples.

Turn the solvent addition pump switch on and click on the baseline .icon. Using the PC 10 pressure dial, adjust the total flow rate to 1.5 mL/min with a 5 mL graduated cylinder and a stop watch (1 mL/min from the column and 0.5 mL/min for the solvent addition eluant). Measure flow for 2.0 min to get 3.0 mL in the cylinder.

After the baseline has been established, click the "Run" icon.

After the run has finished, change the autosampler, the ED 40 and the pump to local and direct control. Change the oven temperature to 20°C, and let flow continue for a few minutes until the oven cools down. Change the pump flow to 1 mL/min at 100% water for a few minutes and rinse NaOH from the pump heads with distilled water.

Calculation.

$$\text{Normalized area for sugar} = \frac{(\text{Area sugar}) \times (\mu\text{g/mL fucose})}{(\text{Area fucose})}$$

Normalized areas are plotted as y values vs. the sugar concentration x values in $\mu$g/mL. The spreadsheet function calculates the slope and the intercept for the standard curve, with zero not included as a point.

$$\text{Amount sugar } (\mu\text{g/mL}) = \frac{((\text{Normalized area for sugar}) - (\text{intercept}))}{(\text{slope})}$$

With reference to Table 1 and 2, samples 1 to 5 were prepared from pulp processed from sawdust. Tyee is a bleached Kraft pulp manufactured from sawdust and has a TAPPI T230 viscosity in 0.5% CED of 14 mPas, Chinook is a fully bleached softwood Kraft grade manufactured from chips from sawmills in the interior of British Columbia; Kraft -T is a fully bleached softwood pulp produced from interior British Columbia sawmill residual chips. All of the pulps are manufactured by Weyerhaeuser Co. Sample 19 is a prehydrolzed kraft pulp manufactured by Buckeye and sample 20 is a sulfite pulp manufactured by Saiccor. Samples 21and 22, are commercial samples of microcrystalline cellulose manufactured by FMC, (called PH101) and Mingtai (Taiwan) (called Comprecel), respectively; sample 23 was obtained from Aldrich Chemical.

Samples 8 to 14 were prepared from southern pine softwood pulp of using wood with a specific gravity of approximately 0.44 to 0.46 g/cm$^3$. FR416 is a Kraft pulp bleached without elemental chlorine, manufactured by Weyerhaeuser Co., and represented by samples 15 and 16, is a bleached Southern Pine softwood pulp which was contacted with a treating agent to produce microcrystalline cellulose, samples 17 and 18.

Table 1 Pulp and Microcrystalline Cellulose Properties

| Pulp Properties | | | | | | | Microcrystalline cellulose Properties | | | |
| --- | --- | --- | --- | --- | --- | --- | --- | --- | --- | --- |
| Sample No. | Wood Species | DP | Xylan, % | Mannan, % | R$_{10}$ | R$_{18}$ | LODP | X-Ray | Xylan, % | Mannan, % |
| 1 | A | 688 | | | | | 197 | | | |
| 2 | A | 778 | 3.87 | 7.36 | 81.2 | 85.5 | 198 | 0.71 | 2.61 | 6.26 |
| 3 | A | 789 | 4.39 | 7.87 | 81 | 86 | 198 | 0.70 | 2.66 | 6.32 |
| 4 | A | 850 | 4.5 | 7.9 | | | 204 | 0.73 | 2.77 | 6.41 |
| 5 | A | 1345 | | | | | 259 | | | |
| 6 | B | 1751 | | | | | 266 | | | |
| 7 | C | 1845 | | | | | 280 | | | |
| 8 | D | 628 | 6.86 | 4.84 | | | 210 | 0.69 | 4.68 | 4.23 |
| 9 | D | 926 | 7.59 | 5.54 | 84.5 | 87.8 | 228 | 0.65 | 5.02 | 4.72 |
| 10 | D | 986 | 7.79 | 5.60 | | | 226 | 0.7 | 4.43 | 4.35 |
| 11 | D | 1008 | 7.71 | 5.60 | | | 229 | 0.7 | 4.59 | 4.58 |
| 12 | D | 717 | 6.53 | 5.22 | 83.6 | 86.9 | 222 | 0.635 | 4.39 | 4.08 |
| 13 | D | 786 | | | 83.6 | 87.6 | 225 | | | |

(continued)

| | Pulp Properties | | | | | | Microcrystalline cellulose Properties | | | |
|---|---|---|---|---|---|---|---|---|---|---|
| Sample No. | Wood Species | DP | Xylan, % | Mannan, % | $R_{10}$ | $R_{18}$ | LODP | X-Ray | Xylan, % | Mannan, % |
| 14 | D | 781 | | | 84.3 | 87.6 | 228 | | | |
| 15 | E | 1118 | 7.74 | 6.71 | | | 245 | 0.62 | 4.13 | 4.61 |
| 16 | E | 1142 | 8.36 | 6.33 | | | 252 | | | |
| 17 | E | 586 | 7.21 | 6.48 | | | 219 | 0.65 | 5.34 | 5.43 |
| 18 | E | 424 | 6.16 | 6.35 | | | 195 | 0.67 | 4.45 | 4.4 |
| 19 | E | 610 | 1.2 | 1.6 | | | 156 | 0.69 | 0.7 | 1.38 |
| 20 | H | 1000 | 2 | 0.50 | | | 213 | 0.64 | 1.38 | 0.48 |
| 21 | | | | | | | 227 | 0.63 | 0.88 | 1.56 |
| 22 | | | | | | | 234 | 0.62 | 1.23 | 0.8 |
| 23 | | | | | | | 220 | 0.64 | 1.13 | 1.24 |
| Wood Species: A - Lodge Pole Pine, Douglas Fir, Spruce, Hemlock, True Fir, Cedar; B - Spruce, Pine Hemlock, Douglas Fir; C - Douglas Fir; D - Southern Pine, specific gravity, ~0.44-0.46 g/cm$^3$; E - Southern Pine; H - Hardwood | | | | | | | | | | |

Table 2 Microcrystalline Cellulose Properties

| Sample No. | Xylan, % | Mannan, % | Viscosity | Brightness | Hemi retention |
|---|---|---|---|---|---|
| 1 | | | | | |
| 2 | 3.87 | 7.36 | 13.4 | | 0.79 |
| 3 | 4.39 | 7.87 | 13.9 | 90.54 | 0.73 |
| 4 | 4.5 | 7.9 | 14.8 | 91.34 | 0.74 |
| 5 | | | | 90.52 | |
| 6 | | | | 90.82 | |
| 7 | | | | 90.02 | |
| 8 | 6.86 | 4.84 | 13.8 | 90.38 | 0.76 |
| 9 | 7.59 | 5.54 | 15.6 | 88.08 | 0.74 |
| 10 | 7.79 | 5.60 | 16.2 | 86.7 | 0.66 |
| 11 | 7.71 | 5.60 | 16.1 | | 0.69 |
| 12 | 6.53 | 5.22 | | | 0.72 |
| 13 | | | | | |
| 15 | 7.74 | 6.71 | | | 0.6 |
| 16 | 8.36 | 6.33 | | 87.94 | |
| 17 | 7.21 | 6.48 | | 88.36 | 0.79 |
| 18 | 6.16 | 6.35 | | 88.99 | 0.71 |
| 19 | | | | 75.97 | 0.74 |
| 20 | | | | 90.93 | 0.74 |
| 21 | | | | 50.34 | |
| 22 | | | | 78.45 | |

(continued)

| Sample No. | Xylan, % | Mannan, % | Viscosity | Brightness | Hemi retention |
|---|---|---|---|---|---|
| 23 | | | 13 | 86.91 | |

**Claims**

1. A method comprising the steps of:

   providing a cellulosic pulp with at least 7 percent hemicellulose and a D.P. of from 200 to 1100;
   providing a treating agent;
   contacting said pulp with said treating agent;

   wherein said cellulosic pulp is reduced to microcrystalline cellulose with a LODP of at least 195 and less than 245 and;
   wherein said microcrystalline cellulose has an X-ray crystallinity index of at least 0.65.

2. The method of claim 1 wherein said treating agent is selected from the group of inorganic acids consisting of hydrochloric acid, sulfuric acid, nitric acid and phosphoric acid and mixtures thereof.

3. The method of claim 2 wherein said inorganic acid is hydrochloric acid.

4. The method of any one of the preceding claims wherein said cellulose pulp is derived from a southern pine softwood pulp.

5. The method of any one of claims 1 to 3 wherein said cellulose pulp is derived from a northern softwood pulp.

6. The method of any one of the preceding claims wherein said microcrystalline cellulose has a xylan content of at least 2.5 percent.

7. The method of any one of the preceding claims wherein said microcrystalline cellulose has a mannan content of at least 4.0 percent.

8. The method of any one of the preceding claims wherein said microcrystalline cellulose has a brightness of at least 86.

9. The method of any one of the preceding claims wherein said microcrystalline cellulose has a viscosity of at least 13 cP.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6605350 B
- US 4295925 A
- US 4295926 A
- US 4298426 A
- US 4295927 A
- US 6491788 B

### Non-patent literature cited in the description

- **SEGAL.** *Textile Research Journal,* 1959, vol. 29, 786